# EUROPÄISCHE PATENTSCHRIFT

(11) **EP 2 681 060 B1**
(45) Veröffentlichungstag und Bekanntmachung des Hinweises auf die Patenterteilung: **20.04.2016**
(21) Anmeldenummer: 12705308.0
(22) Anmeldetag: 23.02.2012
(51) Int. Cl.: B60G 17/052, B60G 17/015, F15B 21/04

(54) **TROCKNERSCHALTUNG FÜR EINE PNEUMATISCHE REGELVORRICHTUNG EINES FAHRZEUGS**
DRYER CIRCUIT FOR A PNEUMATIC REGULATING DEVICE OF A VEHICLE
MONTAGE DE SÉCHEUR D'AIR POUR DISPOSITIF DE RÉGLAGE PNEUMATIQUE D'UN VÉHICULE

(30) Priorität: 01.03.2011 DE 102011004896; 28.09.2011 DE 102011083614
(43) Veröffentlichungstag der Anmeldung: 08.01.2014
(73) Patentinhaber: Continental Teves AG & Co. OHG, 60488 Frankfurt (DE)
(72) Erfinder: FOLCHERT, Uwe, 31867 Lauenau (DE); HEIN, Dierk, 30900 Wedemark (DE); WITALA, Christian, 30175 Hannover (DE)
(86) Internationale Anmeldenummer: PCT/EP2012/053085
(87) Internationale Veröffentlichungsnummer: WO 2012/116923

(56) Entgegenhaltungen:
- EP-B1- 1 536 956
- DE-A1-102008 034 240
- DE-C1- 19 959 556
- KR-A- 20060 021 972
- US-B2- 7 255 358

## Beschreibung

Die Erfindung betrifft eine Trocknerschaltung für eine pneumatische Regelvorrichtung eines Fahrzeugs.

Den bisherigen Stand der Technik für pneumatische Regelvorrichtungen eines Fahrzeugs geben folgende Druckschriften wieder: DE 10 2009 003 472 A1, EP 1 243 447 B1, DE 101 60 972 C1, US 7255358 B2, EP 1 536 956 B1, DE 199 18 157 C1, EP 1395754A1, DE 20102436U1, DE 102008023594A1, DE 103 14 570 A1, DE 10 2008 034 240 A1.

So beschreibt die DE 199 59 556 C1 eine geschlossene Niveauregeleinrichtung für Fahrzeuge, in welcher mittels einer Pumpe Druckmittel zwischen einem Druckmittelvorratsbehälter und Druckmittelkammern gefördert werden kann. Mittels steuerbaren Wegventilen und entsprechenden Leitungen kann auch in umgekehrter Richtung von den Druckmittelkammern in den Druckmittelvorratsbehälter das Druckmittel gefördert werden. Dabei durchströmt das Druckmittel in beiden Fällen die Pumpe immer nur in einer Richtung.

Aus der DE 10 2008 034 240 A1 ist eine Niveauregelanlage bekannt, welche einen zwei- oder mehrstufigen Kompressor, mehrere Druckmittelkammern, einen Druckmittelvorratsbehälter und einen Trockner umfasst. Im Falle der offenen Niveauregelanlage wird das Druckmittel aus der Atmosphäre angesaugt und mittels der ersten Verdichterstufe auf ein erstes Druckniveau verdichtet und anschließend mittels der zweiten Verdichterstufe auf ein zweites Druckniveau verdichtet. Das somit verdichtete Druckmittel wird anschließend über einen Trockner dem Druckmittelvorratsbehälter oder den Druckmittelkammern zugeführt.

Demgegenüber liegt der Erfindung die Aufgabe zugrunde, eine verbesserte Vorrichtung für eine pneumatische Regelvorrichtung eines Fahrzeugs mit optimierter Schaltung des Lufttrockners zu schaffen.

Die der Erfindung zugrunde liegende Aufgabe wird jeweils mit den Merkmalen des unabhängigen Patentanspruchs gelöst. Bevorzugte Ausführungsformen der Erfindung sind in den abhängigen Patentansprüchen angegeben.

Es wird eine Trocknerschaltung für eine pneumatische Regelvorrichtung eines Fahrzeugs geschaffen, umfassend
- einen Lufttrockner,
- einen ersten Verdichter,
wobei der erste Verdichter dazu ausgebildet ist, in der pneumatischen Regelvorrichtung vorhandene Systemluft zu verdichten, wobei der Lufttrockner, der erste Verdichter und an den ersten Verdichter anschließbare Subsysteme der pneumatischen Regelvorrichtung so angeordnet sind, dass im Betriebsmodus einer geschlossenen Luftversorgung zwischen den Komponenten eines der Subsysteme unter Verwendung des ersten Verdichters und mittels eines Umschaltventils Luft unter Umgehung des Lufttrockners befördert wird.

Bei den an den ersten Verdichter anschließbaren Subsystemen kann es sich beispielsweise um Subsysteme mit Komponenten wie ein pneumatisches Aktuatorensystem, einen Druckluftspeicher, ein Trocknungssystem, ein Ventilsystem oder sonstige Komponenten einer pneumatischen Regelvorrichtung handeln.

Handelt es sich bei den Komponenten eines an den ersten Verdichter anschließbaren Subsystems beispielsweise um ein pneumatisches Aktuatorensystem und einen Druckluftspeicher, so könnte die beschriebene Trocknerschaltung den Vorteil haben, dass während der Regelvorgänge im Betriebsmodus einer geschlossenen Luftversorgung der Lufttrockner nicht durchströmt wird. Während der Regelvorgänge "Anheben des Fahrzeugs" und "Senkung des Fahrzeugs" fände somit keine Trocknung der Luft statt. Die beiden Regelvorgänge wären somit effizienter und performanter.

Im Betriebsmodus einer geschlossenen Luftversorgung (GLV) wird im Gegensatz zum Betriebsmodus einer offenen Luftversorgung (OLV) die in dem pneumatischen Aktuatorensystem nicht mehr benötigte Druckluft nicht über ein Umgebungsventil in die Umgebungsluft abgelassen, wenn beispielsweise der Fahrzeugaufbau abgesenkt werden soll, sondern mit Hilfe eines Verdichters aus dem pneumatischen Aktuatorensystem wieder in einen Druckluftspeicher überführt. So wird beispielsweise auch in einer geschlossenen Niveauregelanlage mit Hilfe des Verdichters Druckluft von dem Druckluftspeicher in die Luftfedern überführt, wenn der Aufbau des Fahrzeugs wieder angehoben werden soll.

Die Trocknerschaltung umfasst weiter einen zweiten Verdichter, wobei der Lufttrockner zwischen dem ersten und dem zweiten Verdichter angeordnet ist und der zweite Verdichter dazu ausgebildet ist, im Betriebsmodus einer offenen Luftversorgung neu hinzu geführte Luft aus einer äußeren Umgebung auf ein erstes niedriges Druckniveau zu verdichten und diese verdichtete Luft durch den Lufttrockner in den ersten Verdichter als getrocknete Luft zu befördern, und der erste Verdichter dazu ausgebildet ist, die getrocknete Luft auf ein zweites höheres Druckniveäu zu verdichten und an die an den ersten Verdichter angeschlossenen Subsysteme der pneumatischen Regelvorrichtung weiter zu befördern.

Dies kann den Vorteil haben, dass beim Befüllen von Subsystemen einer pneumatischen Regelvorrichtung eines Fahrzeugs von einer äußeren Umgebung neu hinzu geführte Luft den Lufttrockner mit einer niedrigen Geschwindigkeit durchströmt, so dass es beim Trocknen der neu hinzu geführten Luft im Eingangsbereich des Lufttrockners nicht zum Mitreißen von Feuchtigkeit mit dem Luftstrom kommt und es somit nicht zur Bildung von Totzonen im Lufttrockner kommt.

Dabei sind unter Totzonen Bereiche innerhalb des Lufttrockners zu verstehen, die nicht aktiv für die Adsorption von Feuchtigkeit genutzt werden.

Nach einer Ausführungsform der Erfindung ist ein an einer Auslassseite des ersten Verdichters angeordnetes erstes Rückschlagventil dazu ausgebildet, eine Rückströmung der auf das zweite Druckniveau verdichteten Luft zurück in den ersten Verdichter zu verhindern.

Eine Verhinderung der Rückströmung von Luft in den ersten Verdichter kann den Vorteil haben, dass die Pumpleistung des ersten Verdichters durch eventuell rückströmende Luft nicht beeinträchtigt wird.

Dies bedeutet, dass das zweistufige Verdichtersystem mit zwischengeschaltetem Lufttrockner und Rückschlagventil an der Auslassseite des zweiten Verdichters ein variabel einsetzbares Kernstück einer weitgehend beliebig konstruierten Regelvorrichtung eines Fahrzeugs oder einer anderen Art von Druckluftregeleinrichtung oder Kompressoreinrichtung darstellen kann.

Nach einer Ausführungsform der Erfindung umfasst ein erstes Subsystem der Subsysteme ein Trocknerventil, wobei das Trocknerventil zwischen dem ersten Rückschlagventil und dem Lufttrockner angeordnet ist.

Dies kann den Vorteil haben, dass durch Veränderung des Schaltzustands des Trocknerventils genau reguliert werden kann, in welcher Phase des jeweiligen Betriebsmodus der pneumatischen Regelvorrichtung der Lufttrockner beansprucht wird und in welcher Phase nicht. Der geöffnete Schaltzustand des Trocknerventils definiert somit ein eindeutiges Zeitintervall zur Regenerierung des Lufttrockners. Der geschlossene Schaltzustand des Trocknerventils definiert wiederum, in welchen Zeitfenstern oder in welchen Betriebsphasen der Regelvorrichtung der Lufttrockner nicht mit Luft regeneriert werden soll. Dies kann den Vorteil haben, dass der Lufttrockner während der gesamten Lebenszeit einer Regelvorrichtung insgesamt weniger beansprucht wird, wodurch die effektive Lebenszeit des Lufttrockners verlängert wird. Durch die Regulation des Einsatzes des Lufttrockners weist der Lufttrockner während seiner Lebensdauer auch eine permanente höhere Effizienz hinsichtlich seiner Funktionalität und Wirkungsweise auf.

Nach einer Ausführungsform der Erfindung umfasst die Trocknerschaltung weiter ein Umgebungsventil, wobei das Umgebungsventil zwischen dem zweiten Verdichter und dem Lufttrockner angeordnet ist und dazu ausgebildet ist, einen schaltbaren Luftpfad zwischen dem Lufttrockner, dem zweiten Verdichter und der Umgebung zu ermöglichen.

Das Umgebungsventil ermöglicht in seinem geöffneten Schaltzustand, dass Luft aus dem Lufttrockner oder Luft, die vom zweiten Verdichter in das geöffnete Umgebungsventil gepumpt wurde, an die äußere Umgebung der Regelvorrichtung abgelassen werden kann. Anderseits kann bei geöffnetem Schaltzustand des Umgebungsventils Luft auch aus der äußeren Umgebung in die Regelvorrichtung eingelassen werden. Somit dient das Umgebungsventil der Entlüftung als auch Belüftung der Regelvorrichtung, wobei stets ein Austausch mit der Umgebungsluft stattfindet und der Lufttrockner beteiligt ist.

Beim Vorgang der Entlüftung wird die bei der Regenerierung des Lufttrockners aus dem Lufttrockner strömende, warme und mit Feuchtigkeit aus dem Trockenmittel angereicherte Luft nach Passage des geöffneten Umgebungsventils an die Umgebung abgegeben. Beim Vorgang der Belüftung wird die von der äußeren Umgebung einströmende Luft bei Passage des Lufttrockners getrocknet.

Der durch das Umgebungsventil schaltbare Luftpfad zwischen dem Lufttrockner, dem zweiten Verdichter und der Umgebung kann den Vorteil haben, dass der Lufttrockner nur dann durchströmt wird, wenn entweder Luft an die Umgebung abgelassen wird oder wenn Luft aus der Umgebung angesaugt wird. Somit kann auch durch den jeweiligen Schaltzustand des Umgebungsventils bestimmt werden, wann der Lufttrockner beansprucht wird und wann nicht. Somit wird der Lufttrockner wiederum hinsichtlich seiner Beanspruchung geschont und seine Lebensdauer verlängert.

Ein zweites Subsystem der Subsysteme kann ein pneumatisches Aktuatorensystem mit einem dem pneumatischen Aktuatorensystem vorgeschalteten ersten Öffnungsventil, einem Druckluftspeicher und einem dem Durckluftspeicher vorgeschalteten zweiten Öffnungsventil umfassen, wobei das erste und zweite Öffnungsventil mit einem Luftpfad miteinander und dem ersten Rückschlagventil verbunden sind.

Der schaltbare Luftpfad innerhalb des zweiten Subsystems ermöglicht, z.B. dass die durch den ersten Verdichter auf das zweite hohe Druckniveau komprimierte Luft je nach Schaltzustand des Öffnungsventils des pneumatischen Aktuatorensystems oder des Durckluftspeichers in das pneumatischen Aktuatorensystem oder in den Druckluftspeicher einströmen bzw. in Gegenrichtung jeweils wieder in Richtung anderer Subsysteme ausströmen kann, wobei das erste Rückschlagventil jeweils den Rück- bzw. Einstrom von Luft zurück in den ersten Verdichter verhindert.

Dies kann den Vorteil haben, dass durch den Schaltzustand der Öffnungsventile, die über Drucksensoren gesteuert werden können, z.B. folgende verschiedene Betriebsphasen definiert werden können:
1. Befüllung des pneumatischen Aktuatorensystems bei geöffnetem Öffnungsventil des pneumatischen Aktuatorensystems und geschlossenem Öffnungsventil des Druckluftspeichers (sogar mit getrockneter Luft aus der äußeren Umgebung) zur Anhebung des Fahrzeugs;
2. Schließung des Öffnungsventil des pneumatischem Aktuatorensystems und Öffnung des Öffnungsventils des Druckluftspeichers bei zu hohem Druckaufbau im pneumatischen Aktuatorensystem;
3. Ablassen von Luft aus dem pneumatischen Aktuatorensystems bei geöffnetem Öffnungsventil des pneumatischen Aktuatorensystems und geöffnetem Öffnungsventil des Druckluftspeichers oder geöffnetem Trocknerventil im ersten Subsystem zur Senkung des Fahrzeugs;
4. Entlüftung des zweiten Subsystems der Regelvorrichtung bei geöffnetem Öffnungsventil des pneumatischen Aktuatorensystems, geöffnetem Öffnungsventil des Druckluftspeichers,geöffnetem Trocknerventil und geöffnetem Umgebungsventil des ersten Subsystems

Nach einer Ausführungsform der Erfindung ist das zweite Subsystem der Subsysteme für einen Betrieb im Betriebsmodus der geschlossener Luftversorgung vorgesehen und umfasst ein pneumatisches Aktuatorensystem mit einem vorgeschalteten Öffnungsventil, einen Druckluftspeicher und ein Umschaltventil, wobei das Umschaltventil dazu ausgebildet ist, einen ersten und einen zweiten Schaltzustand einzunehmen, wobei in dem ersten Schaltzustand ein Luftstrom ausschließlich in Richtung vom pneumatischen Aktuatorensystem zum Druckluftspeicher unter Umgehung des Lufttrockners ermöglicht wird und in dem zweiten Schaltzustand einen Luftstrom ausschließlich in Richtung vom Druckluftspeicher zum pneumatischen Aktuatorensystem ebenfalls unter Umgehung des Lufttrockners ermöglicht wird.

Es wird also eine Schaltung für eine pneumatische Regelvorrichtung ermöglicht, bei der sowohl im GLV Regelvorgang "Luftförderung vom pneumatischen Aktuatorensystem in den Druckluftspeicher" als auch im GLV Regelvorgang "Luftförderung vom Druckluftspeicher zum pneumatischen Aktuatorensystem" der Lufttrockner umgangen wird und gleichzeitig auch bei beiden Regelvorgängen ein Verdichter zum Einsatz kommt. Durch Umschalten zwischen zwei möglichen Schalterzuständen eines zwischen dem pneumatischen Aktuatorensystem, dem Druckluftspeicher und dem Verdichter angeordneten Umschaltventils kann zwischen den beiden GLV Regelvorgängen hin- und hergeschaltet werden, wobei in beiden Regelvorgängen dieselben Komponenten der Schaltung benutzt werden, nämlich nur das pneumatische Aktuatorensystem, der Druckluftspeicher, das Umschaltventil und ein Verdichter. Der Lufttrockner wird bei beiden GLV-Regelvorgängen gar nicht beansprucht.

Die Nicht-Beanspruchung des Lufttrockners bei beiden GLV-Regelvorgängen kann den Vorteil haben, dass der Lufttrockner nicht unnötigerweise mit Druckluft durchströmt wird, sondern nur in der Regenerierungs-, Be- und Entlüftungsphase des Systems. Es können somit getrennte Zeitintervalle geschaffen werden, in der sich der Lufttrockner vollständig und ohne Belastung durch weitere Funktionsausübungen regenerieren kann. Der Lufttrockner kann daher in seiner Geometrie optimal auf seine Basisfunkionen Trocknung und Regeneration ausgelegt werden können. Gleichzeitig kann die Bauart des Lufttrockners vereinfacht werden. Auch können die Rohrquerschnitte verkleinert werden. Die Anzahl an Leakagestellen wird reduziert. Die Performance der GLV-Regelvorgänge der pneumatischen Regelvorrichtung wird verbessert.

Bei der Luftmengenberechnung zur Eruierung der sonstigen Betriebsparameter während der beiden GLV-Regelvorgänge ist das Volumen des Lufttrockners nicht zu berücksichtigen. Denn der Lufttrockner ist während der GLV-Regelvorgänge physikalisch vom System abgetrennt und wird nur im Belüftungsfall temporär zugeschaltet.

Dadurch, dass die beanspruchte Trocknerschaltung bei beiden GLV-Regelvorgängen jeweils den Einsatz eines Verdichters vorsieht, kann die in dem Druckluftspeicher vorhandene Luftmenge effizienter als bisher genutzt werden. Es muss nicht, wie bisher der Druck im Druckluftspeicher höher gehalten werden als im pneumatischen Aktuatorensystem.

Eine Ausführungsform der Erfindung umfasst weiter ein zweites und drittes Rückschlagventil, wobei das zweite Rückschlagventil zwischen dem Umschaltventil und dem ersten Verdichter angeordnet ist und das dritte Rückschlagventil zwischen dem ersten Verdichter und dem Lufttrockner angeordnet ist, wobei das dritte Rückschlagventil so angeordnet ist, dass ein Luftstrom zwischen dem Umschaltventil und dem ersten Verdichter unter Umgehung des dritten Rückschlagventils ermöglicht wird.

Die Anordnung des zweiten Rückschlagventils zwischen dem Umschaltventil und dem ersten Verdichter kann den Vorteil haben, dass der Luftstrom im ersten Schaltzustand des Umschaltventils ausschließlich in Richtung vom pneumatischen Aktuatorensystem zum Druckluftspeicher befördert wird bzw. im zweiten Schaltzustand des Umschaltventils ausschließlich in Richtung vom Druckluftspeicher zum pneumatischen Aktuatorensystem befördert wird, denn es erlaubt keine Rückströmung. Die Luft wird gezielt in eine Richtung befördert, so dass die Effizienz der beiden GLV-Regelvorgänge der pneumatischen Regelvorrichtung erheblich gesteigert wird.

Die Anordnung des dritten Rückschlagventils so, dass ein Luftstrom zwischen dem Umschaltventil und dem erstem Verdichter unter Umgehung des dritten Rückschlagventils ermöglicht wird, verhindert, dass Luft während der Regelvorgänge im GLV-Betrieb in den Lufttrockner strömt. Während der beiden Regelvorgänge findet keine Trocknung der Luft statt. Die Regelvorgänge "Anheben des Fahrzeugs" und "Senkung des Fahrzeugs" sind somit effizienter und performanter.

Nach einer Ausführungsform der Erfindung sind das zweite und das dritte Rückschlagventil dazu ausgebildet, einen Luftstrom ausschließlich in Richtung des ersten Verdichters zu ermöglichen.

Die Funktionsweise des zweiten Rückschlagventils, einen Luftstrom ausschließlich in Richtung des ersten Verdichters zu ermöglichen, kann den Vorteil haben, dass das im GLV-Betrieb einmal erreichte maximale Saugvolumen nicht wieder durch rückströmende Luft verkleinert werden kann. Das zweite Rückschlagventil bewirkt somit eine Steigerung der Ansaugleistung des zweiten Verdichters.

Die Funktionsweise des dritten Rückschlagventils, einen Luftstrom ausschließlich in Richtung des ersten Verdichters zu ermöglichen, kann den Vorteil haben, dass die Ansaugleistung des ersten Verdichters nochmals dadurch verstärkt wird, dass auch keine Luft in den Lufttrockner zurückströmen kann. Insofern bewirkt auch das dritte Rückschlagventil eine Steigerung der Ansaugleistung des ersten Verdichters.

Beide Rückschlagventile wirken somit synergistisch positiv auf die Leistung des ersten Verdichters, wodurch die Regelvorgänge im GLV-Betrieb effizienter und performanter werden.

Das Umschaltventil ist als 4/2-Wegeventil oder als eine Kombination von zwei 3/2-Wegeventilen ausgebildet.

Die Ausbildung des Umschaltventils als 4/2-Wegeventil kann den Vorteil haben, dass durch minimalen Materialeinsatz durch nur zwei verschiedene Schaltzustände und vier vorliegende Anschlüsse zwei getrennte, jeweils in entgegen gesetzter Richtung verlaufende

Luftströmungen zwischen dem pneumatischen Aktuatorensystem und dem Druckluftspeicher realisiert werden können.

Die Ausbildung des Umschaltventils als eine Kombination von zwei 3/2-Wegeventilen kann den Vorteil haben, dass die technische Realisierung eines Umschaltens zwischen den beiden GLV-Regelvorgängen "Luftförderung vom pneumatischen Aktuatorensystem zum Druckluftspeicher" und "Luftförderung vom Druckluftspeicher zum pneumatischen Aktuatorensystem" erheblich erleichtert wird. Es ist technisch leichter, zwei 3/2-Wege-Magnetventile zu steuern als ein 4/2-Wege-Magnetventil.

Nach einer Ausführungsform der Erfindung ist das Umgebungsventil elektrisch oder pneumatisch schaltbar.

Eine Öffnung und Schließung des Umgebungsventils kann pneumatisch durch Drucksensoren und entsprechende Stellglieder erfolgen oder elektromagnetisch.

Dies kann den Vorteil haben, dass eine manuelle Betätigung des Umgebungsventils überflüssig wird. Eine elektromagnetische Schaltung oder durch Drucksensoren gesteuerte autonome Schaltung des Umgebungsventils erhöht die Sicherheit eines gewährleisteten Betriebs des Umgebungsventils hinsichtlich des Wechsels zwischen seinen beiden Schaltzuständen.

Die Ausführungsformen der Erfindung könnten eine pneumatische Regelvorrichtung eines Fahrzeugs mit folgenden Vorteilen hinsichtlich der Konstellation eines Lufttrockners in einer pneumatischen Regelvorrichtung liefern, bei der z.B.:
- für den Betriebsmodus einer geschlossenen Luftversorgung (GLV) und für den Betriebsmodus einer offenen Luftversorgung (OLV) keine zusätzlichen Einsatzbedingungen erfüllt werden müssen und keine Kompromisse bei der Auslegung des Lufttrockners eingegangen werden müssen,
- eine direkte Befüllung des pneumatischen Aktuatorensystems mit getrockneter Luft aus der Umgebung möglich ist,
- im Betriebsmodus der offenen Luftversorgung es nicht zu einer Warmregeneration im Eingangsbereich des Lufttrockners kommt,
- sowohl bei der Beförderung von Luft vom Druckluftspeicher zum pneumatischen Aktuatorensystem als auch bei der Beförderung von Luft vom pneumatischen Aktuatorensystem zum Druckluftspeicher ein Verdichter zum Einsatz kommt,
- sowohl bei der Beförderung von Luft vom Druckluftspeicher zum pneumatischen Aktuatorensystem als auch bei der Beförderung von Luft vom pneumatischen Aktuatorensystem der Lufttrockner umgangen wird.

Das beschriebene zweistufige Verdichtersystem mit zwischengeschaltetem Lufttrockner und einem Rückschlagventil an der Auslassseite des ersten Verdichters in seiner Bauweise, Anordnung und sonstigen Auslegung muss nicht verändert werden, um die unterschiedlichen Bedingungsparameter für einen Betrieb der pneumatischen Regelvorrichtung eines Fahrzeugs im Betriebsmodus einer geschlossenen, offenen oder halbgeschlossenen Luftversorgung zu erfüllen. Das beschriebene zweistufige Verdichtersystem mit zwischengeschaltetem Lufttrockner und einem Rückschlagventil an der Auslassseite des ersten Verdichters könnte z.B. ein fixes Modul einer pneumatischen Regelvorrichtung darstellen, an das weitere beliebige Module einer Druckluftvorrichtung angeschlossen werden können. Um die unterschiedlichen Betriebsparameter für die verschiedenen Betriebsmodi einer geschlossenen, offenen oder halbgeschlossenen Luftversorgung zu erfüllen, brauchten nur noch die Betriebsparameter der angeschlossenen anderen Module bzw. Subsysteme verändert werden. Dies würde nicht nur die Berechnung der Betriebsparameter aufgrund eingeschränkter Variablenanzahl erleichtern, sondern auch den Herstellungsprozess.

Im Folgenden werden bevorzugte Ausführungsformen der Erfindung anhand der folgenden Zeichnungen näher erläutert.

Es zeigen:
- Figur 1: einen beispielsgemäßen Schaltplan einer geschlossenen pneumatischen Regelvorrichtung
- Figur 2: einen beispielsgemäßen Schaltplan einer geschlossenen pneumatischen Regelvorrichtung
- Figur 3a: einen beispielsgemäßen Schaltplan einer geschlossenen pneumatische Regelvorrichtung
- Figur 3b: einen beispielsgemäßen Schaltplan einer geschlossenen pneumatische Regelvorrichtung
- Figur 4: einen Schaltplan einer pneumatische Regelvorrichtung im OLV-Betrieb
- Figur 5: Zwei beispielsgemäße 3/2-Wegeventile

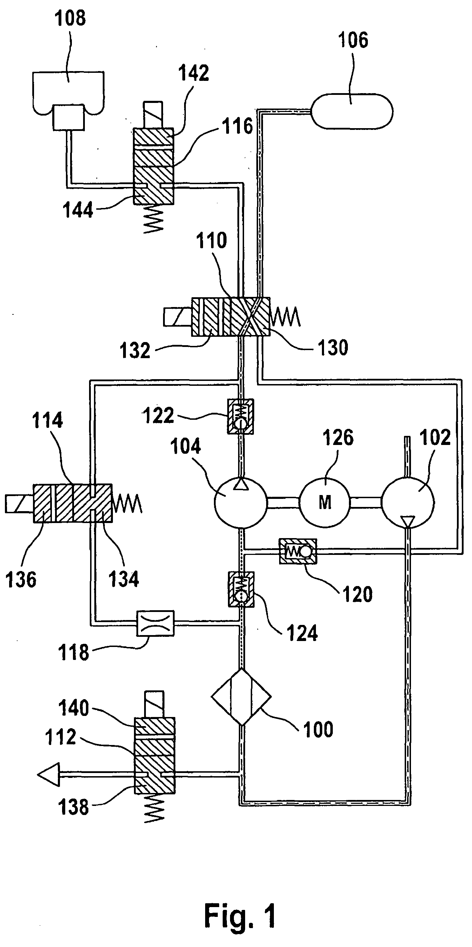

Figur 1 zeigt einen Schaltplan einer geschlossenen pneumatischen Regelvorrichtung, wobei die Schaltzustände der beteiligten Ventile, umfassend ein Umschaltventil 110, ein Trocknerventil 114 und ein Umgebungsventil 112, alle insgesamt so eingestellt sind, dass der Druckluftspeicher 106 im OLV-Betrieb befüllt wird.

Das Schaltbild zeigt, dass der Lufttrockner 100 zwischen dem zweiten Verdichter 102 und dem ersten Verdichter 104 geschaltet ist.

Beim Vorgang des Befüllens der Druckluftspeichers 106 verdichtet der zweite Verdichter 102 Luft aus der Umgebung auf ein erstes Druckniveau und schiebt sie durch den Lufttrockner 100. Der erste Verdichter 104 verdichtet die getrocknete und vorverdichtete Luft auf das endgültige Druckniveau, mit welchem die Luft beim Schaltzustand 130 des Umschaltventils 110 in den Druckluftspeicher 106 geleitet wird. Dabei verhindert das erste Rückschlagventil 122 einen Rückstrom der Luft in den ersten Verdichter 104. Das dritte Rückschlagventil 124 verhindert einen Rückstrom der Luft in den Lufttrockner 100. Das zweite Rückschlagventil 120 verhindert einen Rückstrom der Luft in Richtung pneumatisches Aktuatorensystem 108, was durch den geschlossenen Schaltzustand 144 des Öffnungsventils 116 unterstützt wird.

Der Lufttrockner 100 wird somit bei der Luftansaugung aus der Umgebung nur mit Luft aus der ersten niedrigen Verdichtungsstufe (z.B. ca. 5 bar) durchströmt. Da es sich bei der Komprimierung von Luft in einem geschlossenen System um eine adiabatische Zustandsänderung mit einer Erhöhung der Lufttemperatur bei hinreichend großer Geschwindigkeit handelt, ist die nach der ersten Verdichtung im Verdichter 102 durch Luftkompression entstandene Lufttemperatur niedriger als dies der Fall wäre, wenn nur eine einstufige Verdichtung bis zum endgültigen Druckniveau (z.B. bis zu 16 bar) mittels nur eines einzigen in der Schaltung vorhandenen Verdichters_{'}stattfinden würde. Aufgrund der beanspruchten Ausprägungsform, wobei die nach der ersten Verdichtungsstufe nur wenig komprimierte Luft, welche durch den Lufttrockner 100 strömt, eine nur unerhebliche

Temperaturerhöhung aufweist, wird das im Lufttrockner 100 vorhandene Trockenmittel effektiver genutzt, denn der Adsorptionsgrad von Feuchtigkeit durch das Trockenmittel ist um so höher, je niedriger das Temperaturniveau der den Lufttrockner 100 durchströmenden Luft ist. Es entstehen keine Totbereiche im Lufttrockner 100 aufgrund zu hoher Eingangstemperatur der durchströmenden Luft.

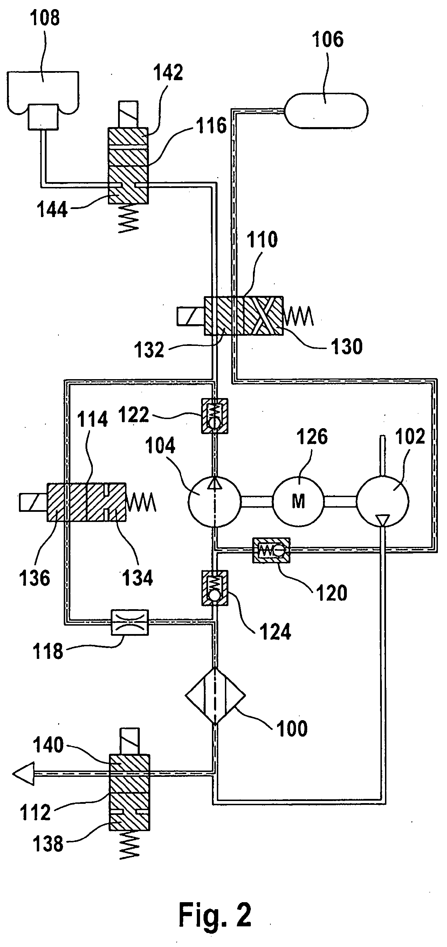

Die Figur 2 zeigt die Schalterzustände in der Regenerationsphase des Lufttrockners 100 im OLV-Betrieb. Beim Schaltzustand 132 des Umschaltventils 110 strömt Luft aus dem Druckluftspeicher 106 zunächst in den ersten Verdichter 104, bei geöffnetem Trocknerventil 114 im Schaltzustand 136 nach Passage einer Drossel 118, die die Luft entspannt, in den Lufttrockner 100 und schließlich bei geöffnetem Schaltzustand 140 des Umgebungsventils 112 an die Umgebung abgegeben. Dies entspricht gleichzeitig dem Vorgang einer Entlüftung des geschlossenen Systems.

Der geöffnete Schaltzustand 140 des Umgebungsventils 112 erlaubt auch eine Luftströmung in umgekehrter Richtung, so dass auch eine Belüftung des Systems mit Luft aus der Umgebung möglich ist. Dabei strömt Luft aus der Umgebung durch das Umgebungsventil 112 direkt in den Lufttrockner 100, dann direkt in den zweiten Verdichter 104. Somit ist eine Durchlüftung des Systems unter Ausschluss des pneumatischen Aktuatorensystems und des Druckluftspeichers in beiden Richtungen möglich, wodurch sich letztendlich auch der Lufttrockner 100 regenerieren kann.

So definiert der geöffnete Schaltzustand des Trocknerventils eine Regenerationsphase des Lufttrockners. Eine dem Lufttrockner vorgeschaltete Drossel kann dabei die Luftgeschwindigkeit verringern und das Druckniveau bis auf das niedrige Druckniveau der Umgebungsluft abbauen. Der niedrige Druck und die niedrige Geschwindigkeit des den Lufttrockner passierenden Luftstroms sind von Vorteil für die Regenerierung des Trockenmittels im Lufttrockner, denn langsame Luftströme ermöglichen der Feuchtigkeit aus dem Trockenmittel besser in die Luft überzugehen als schnelle Luftströme. Wird die Luft unmittelbar nach einer Nutzung der ersten Verdichterstufen im GLV-Betrieb abgelassen, wobei es durch die Verdichtung zu einer Erwärmung des ersten Verdichters kommt, wird diese beim Durchströmen des ersten Verdichters erwärmt. Dies ist ebenfalls von Vorteil für die Regenerierung des Trockenmittels im. Lufttrockner, denn warme Luft nimmt einen höheren Anteil an Feuchtigkeit auf als kalte Luft. Der warme und langsame Luftstrom nimmt somit effektiver die Feuchtigkeit aus dem Trockenmittel auf und befördert diese aus dem Lufttrockner hinaus. Das Trockenmittel ist nun wieder fast frei von Feuchtigkeit. Der Lufttrockner hat sich somit regeneriert, ohne durch andere Betriebsprozesse unnötig in Anspruch genommen worden zu sein.

Die eindeutige Bestimmung eines Zeitintervalls für die Regenerierung des Lufttrockners durch den geöffneten Schaltzustand des Trocknerventils kann somit auch den Vorteil haben, dass der Regenerationsprozess des Lufttrockners effektiver abläuft.

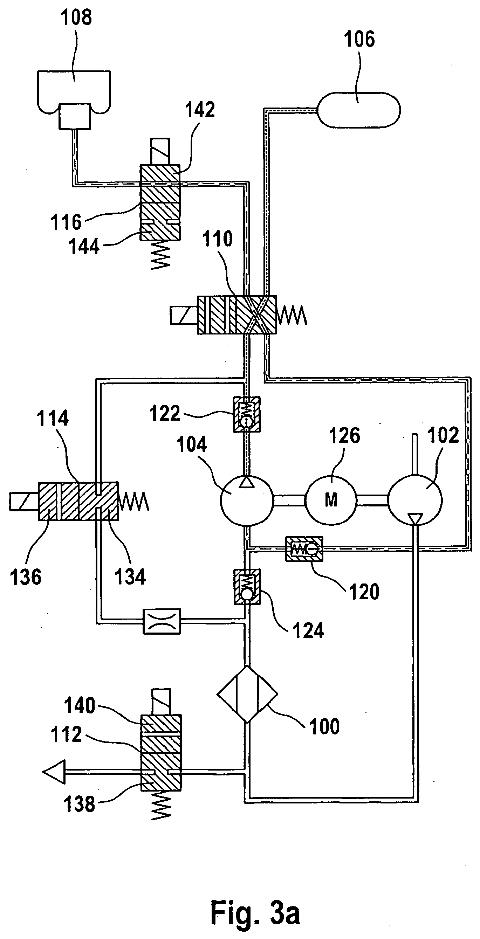

Die Fig. 3a zeigt den Schaltzustand der pneumatischen Regelvorrichtung in einer Phase des Regelbetriebs, wobei beim ersten Schaltzustand 130 des Umschaltventils 110 die Luft ausschließlich in Richtung vom pneumatischen Aktuatorensystem 108 zum Druckluftspeicher 106 unter Umgehung des Lufttrockners 100 verschoben wird. Ein Rückschlagventil 120, das zwischen dem Umschaltventil 110 und dem ersten Verdichter 104 geschaltet ist, verhindert den Rückstrom der Luft vom ersten Verdichter 104 zum Umschaltventil 110. Ein weiteres Rückschlagventil 124, das zwischen dem Lufttrockner 100 und dem ersten Verdichter 104 angeordnet ist, verhindert, dass Luft in den Lufttrockner 100 strömt. Ein erstes Rückschlagventil 122, dass zwischen dem ersten Verdichter 104 und dem Umschlagventil 110 geschaltet ist, verhindert, dass Luft zurück in den ersten Verdichter 104 strömt. Außerdem befindet sich das Trocknerventil 114 in geschlossenem Schaltzustand 134, so dass keine Luft in den Lufttrockner 100 fließen kann.

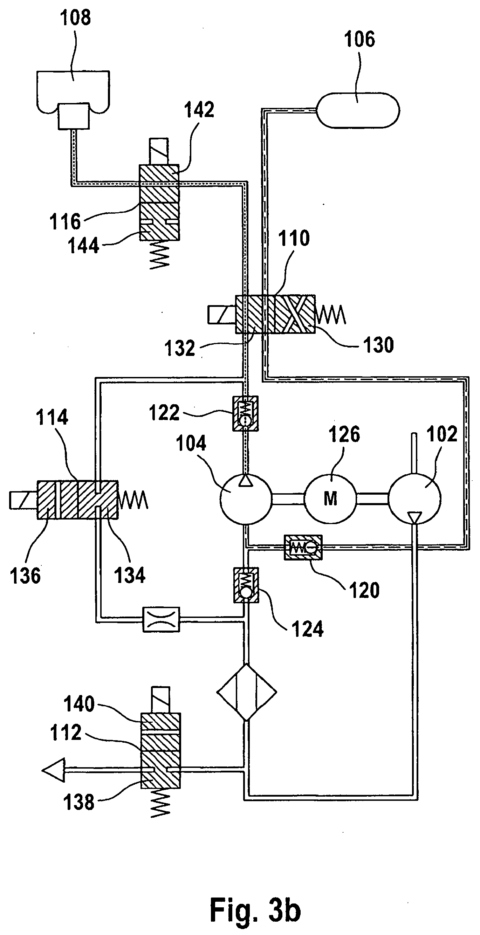

Die Fig. 3b zeigt den Schaltzustand der pneumatischen Regelvorrichtung in einer weiteren Phase des Regelbetriebs, wobei beim zweiten Schaltzustand 132 des Umschaltventils 110 die Luft ausschließlich in Richtung vom Druckluftspeicher 106 zum pneumatischen Aktuatorensystem 108 unter Umgehung des Lufttrockners 100 verschoben wird. Das Rückschlagventil 120, das zwischen dem Umschaltventil 110 und dem ersten Verdichter 104 geschaltet ist, verhindert auch in diesem Falle den Rückstrom der Luft vom ersten Verdichter 104 zum Umschaltventil 110. Das dritte Rückschlagventil 124, das zwischen dem Lufttrockner 100 und dem ersten Verdichter 104 angeordnet ist, verhindert auch hier, dass Luft in den Lufttrockner 100 strömt. Das erste Rückschlagventil 122, dass zwischen dem ersten Verdichter 104 und dem Umschlagventil 110 geschaltet ist, verhindert, dass Luft zurück in den ersten Verdichter 104 strömt. Außerdem befindet sich das Trocknerventil 114 in geschlossenem Schaltzustand 134, so dass keine Luft in den Lufttrockner 100 fließen kann.

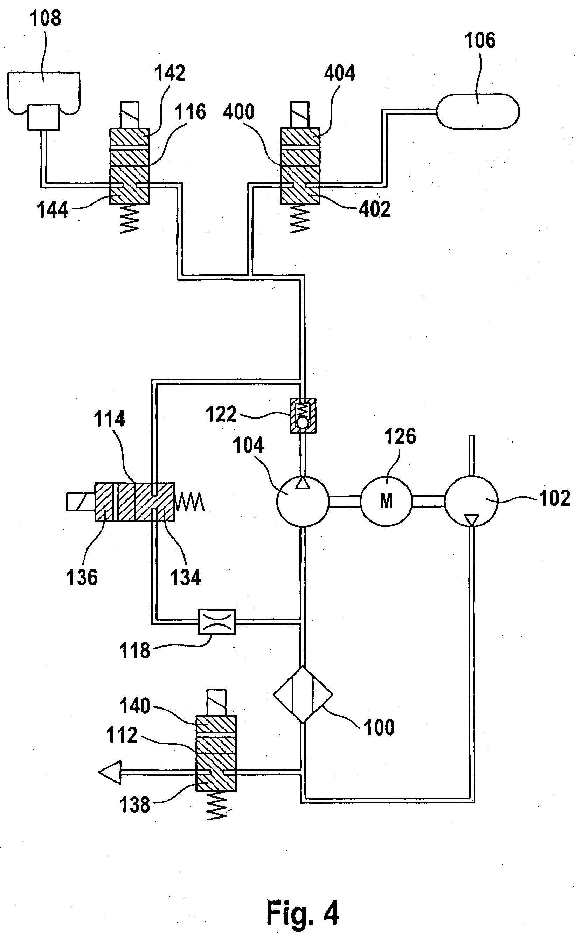

Die Figur 4 zeigt den Schaltzustand der pneumatischen Regelvorrichtung im Betriebsmodus einer offenen Luftversorgung. Der wesentliche Unterschied zur Schaltung im Betriebsmodus der geschlossenen Luftversorgung besteht darin, dass das Umschaltventil 110 wegfällt. Anstelle dessen befindet sich ein einfaches Öffnungsventil 400 mit einem geöffneten Schaltzustand 402 und einem geschlossenen Schaltzustand 402. Zudem sind die Rückschlagventile 120 und 124 entfallen.

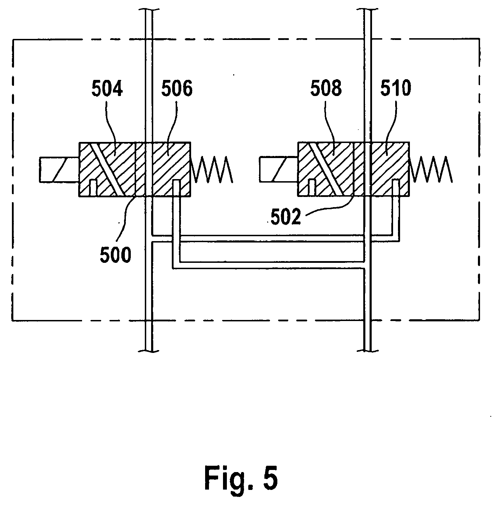

Die Figur 5 zeigt eine weitere Ausführungsform des Umschaltventils 110 in Form einer Kombination zweier 3/2-Wegeventile 500 und 502 mit ihren Schaltzuständen 504 und 506 bzw. 508 und 510, die in einer Schaltung einer pneumatischen Regelvorrichtung zum Einsatz kommen kann.

### Bezugszeichenliste

- 100: Lufttrockner
- 102: zweiter Verdichter
- 104: erster Verdichter
- 106: Druckluftspeicher
- 108: pneumatisches Aktuatorensystem
- 110: Umschaltventil
- 112: Umgebungsventil
- 114: Trocknerventil
- 116: Öffnungsventil
- 118: Drossel
- 120: zweites Rückschlagventil
- 122: erstes Rückschlagventil
- 124: drittes Rückschlagventil
- 126: Motor
- 130: Schaltzustand
- 132: Schaltzustand
- 134: Schaltzustand
- 136: Schaltzustand
- 138: Schaltzustand
- 140: Schaltzustand
- 142: Schaltzustand
- 144: geschlossener Schaltzustand des dem pneumatischen Aktuatorensystem vorgeschalteten Offnungsventils
- 500, 502: 3/2-Wegeventile
- 504, 506, 508, 510: Schaltzustände

## Patentansprüche

1. Trocknerschaltung für eine pneumatische Regelvorrichtung eines Fahrzeugs umfassend
- einen Lufttrockner (100),
- einen ersten Verdichter (104),
wobei der erste Verdichter (104) dazu ausgebildet ist, in der pneumatischen Regelvorrichtung vorhandene Systemluft zu verdichten, wobei der Lufttrockner (100), der erste Verdichter (104) und an den ersten Verdichter (104) anschließbare Subsysteme der pneumatischen Regelvorrichtung so angeordnet sind, dass im Betriebsmodus einer geschlossenen Luftversorgung zwischen den Komponenten eines der Subsysteme unter Verwendung des ersten Verdichters (104) und mittels eines Umschaltventils (110, 500, 502), welches als 4/2-Wegeventil (110) oder als eine Kombination von zwei 3/2-Wegeventilen (500, 502) ausgebildet ist, Luft unter Umgehung des Lufttrockners (100) befördert wird **dadurch gekennzeichnet, dass** die Trocknerschaltung weiter einen zweiten Verdichter (102) umfasst, wobei der Lufttrockner (100) zwischen dem ersten und dem zweiten Verdichter (104, 102) angeordnet ist und der zweite Verdichter (102) dazu ausgebildet ist, im Betriebsmodus einer offenen Luftversorgung neu hinzu geführte Luft aus einer äußeren Umgebung auf ein erstes niedriges Druckniveau zu verdichten und diese verdichtete Luft durch den Lufttrockner (100) in den ersten Verdichter (104) als getrocknete Luft zu befördern und der erste Verdichter (104) dazu ausgebildet ist, die getrocknete Luft auf ein zweites höheres Druckniveau zu verdichten und an die an den ersten Verdichter (104) angeschlossenen Subsysteme der pneumatischen Regelvorrichtung weiter zu befördern.

2. Vorrichtung nach Anspruch 1, wobei ein an einer Auslassseite des ersten Verdichters (104) angeordnetes erstes Rückschlagventil (122) dazu ausgebildet ist, eine Rückströmung der auf das zweite Druckniveau verdichteten Luft zurück in den ersten Verdichter (104) zu verhindern.

3. Vorrichtung nach Anspruch 2, wobei ein erstes Subsystem der Subsysteme ein Trocknerventil (114) umfasst, wobei das Trocknerventil (114) zwischen dem ersten Rückschlagventil (122) und dem Lufttrockner (100) angeordnet ist.

4. Vorrichtung nach den Ansprüchen 1 bis 3, wobei die Trocknerschältung weiter ein Umgebungsventil (112) umfasst, wobei das Umgebungsventil (112) zwischen dem zweiten Verdichter (102) und dem Lufttrockner (100) angeordnet ist und dazu ausgebildet ist, einen schaltbaren Luftpfad zwischen dem Lufttrockner (100), dem zweiten Verdichter (102) und der Umgebung zu ermöglichen.

5. Vorrichtung nach Anspruch 4, wobei das Umgebungsventil (112) elektrisch oder pneumatisch schaltbar ist.

6. Vorrichtung nach einem der Ansprüche 1 bis 5, wobei ein zweites Subsystem der Subsysteme für einen Betrieb im Betriebsmodus der geschlossener Luftversorgung vorgesehen ist und ein pneumatisches Aktuatorensystem (108) mit einem vorgeschalteten Öffnungsventil (116), einen Druckluftspeicher (106) und das Umschaltventil (110) umfasst, wobei das Umschaltventil (110) dazu ausgebildet ist, einen ersten (130) und einen zweiten Schaltzustand (132) einzunehmen, wobei in dem ersten Schaltzustand (130) ein Luftstrom ausschließlich in Richtung vom pneumatischen Aktuatorensystem (108) zum Druckluftspeicher (106) unter Umgehung des Lufttrockners (100) ermöglicht wird und in dem zweiten Schaltzustand (132) einen Luftstrom ausschließlich in Richtung vom Druckluftspeicher (106) zum pneumatischen Aktuatorensystem (108) ebenfalls unter Umgehung des Lufttrockners (100) ermöglicht wird.

7. Vorrichtung nach Anspruch 6, weiter umfassend ein zweites (120) und drittes Rückschlagventil (124), wobei das zweite Rückschlagventil (120) zwischen dem Umschaltventil (110) und dem ersten Verdichter (104) angeordnet ist und das dritte Rückschlagventil (124) zwischen dem ersten Verdichter (104) und dem Lufttrockner (100) angeordnet ist, wobei das dritte Rückschlagventil (124) so angeordnet ist, dass ein Luftstrom zwischen dem Umschaltventil (110) und dem erstem Verdichter (104) unter Umgehung des dritten Rückschlagventils (124) ermöglicht wird.

8. Vorrichtung nach Anspruch 7, wobei das zweite (120) und das dritte Rückschlagventil (124) dazu ausgebildet sind, einen Luftstrom ausschließlich in Richtung des ersten Verdichters (104) zu ermöglichen.

## Claims

1. Dryer circuit for a pneumatic regulating device of a vehicle, comprising
- an air dryer (100),
- a first compressor (104),
wherein the first compressor (104) is designed to compress system air present in the pneumatic regulating device, wherein the air dryer (100), the first compressor (104) and subsystems, which can be connected to the first compressor (104), of the pneumatic regulating device are arranged in such a way that, in the operating mode of a closed air supply, between the components of one of the subsystems using the first compressor (104) and by means of a switchover valve (110, 500, 502), which is designed as a 4/2-way valve (110) or as a combination of two 3/2-way valves (500, 502), air is delivered so as to bypass the air dryer (100), **characterized in that** the dryer circuit further comprises a second compressor (102), wherein the air dryer (100) is arranged between the first and the second compressor (104, 102) and the second compressor (102) is designed so that, in the operating mode of an open air supply, it compresses newly supplied air from an external environment to a first, lower pressure level and delivers this compressed air through the air dryer (100) into the first compressor (104) as dried air and the first compressor (104) is designed to compress the dried air to a second, higher pressure level and to deliver it onward to the subsystems of the pneumatic regulating device which are connected to the first compressor (104).

2. Device according to Claim 1, wherein a first check valve (122) arranged on an outlet side of the first compressor (104) is designed to prevent the air compressed to the second pressure level from flowing back into the first compressor (104).

3. Device according to Claim 2, wherein a first subsystem of the subsystems comprises a dryer valve (114), wherein the dryer valve (114) is arranged between the first check valve (122) and the air dryer (100).

4. Device according to Claims 1 to 3, wherein the dryer circuit furthermore comprises an environment valve (112), wherein the environment valve (112) is arranged between the second compressor (102) and the air dryer (100) and is designed to enable a switchable air path between the air dryer (100), the second compressor (102) and the environment.

5. Device according to Claim 4, wherein the environment valve (112) is electrically or pneumatically operated.

6. Device according to one of Claims 1 to 5, wherein a second subsystem of the subsystems is provided for operation in the operating mode of a closed air supply and comprises a pneumatic actuator system (108) having an upstream opening valve (116), a compressed air reservoir (106) and the switchover valve (110), wherein the switchover valve (110) is designed to adopt a first (130) and a second operating state (132), wherein, in the first operating state (130), an air flow is allowed exclusively in the direction from the pneumatic actuator system (108) to the compressed air reservoir (106) while bypassing the air dryer (100) and, in the second operating state (132), an air flow is allowed exclusively in the direction from the compressed air reservoir (106) to the pneumatic actuator system (108), likewise while bypassing the air dryer (100).

7. Device according to Claim 6, further comprising a second (120) and a third check valve (124), wherein the second check valve (120) is arranged between the switchover valve (110) and the first compressor (104), and the third check valve (124) is arranged between the first compressor (104) and the air dryer (100), wherein the third check valve (124) is arranged in such a way that an air flow is allowed between the switchover valve (110) and the first compressor (104) while bypassing the third check valve (124).

8. Device according to Claim 7, wherein the second (120) and the third check valve (124) are designed to allow an air flow exclusively in the direction of the first compressor (104).

## Revendications

1. Montage de sécheur pour un dispositif de régulation pneumatique d'un véhicule, comprenant :
- un sécheur d'air (100),
- un premier compresseur (104),
le premier compresseur (104) étant réalisé pour comprimer l'air de système présent dans le dispositif de régulation pneumatique, le sécheur d'air (100), le premier compresseur (104) et des sous-systèmes du dispositif de régulation pneumatique pouvant être raccordés au premier compresseur (104) étant disposés de telle sorte qu'en mode de fonctionnement d'une alimentation en air fermée, de l'air soit refoulé en contournant le sécheur d'air (100) entre les composants de l'un des sous-systèmes en utilisant le premier compresseur (104) et au moyen d'une soupape de commutation (110, 500, 502) qui est réalisée sous forme de soupape à 4/2 voies (110) ou sous forme d'une combinaison de deux soupapes à 3/2 voies (500, 502), **caractérisé en ce que** le montage de sécheur comprend en outre un deuxième compresseur (102), le sécheur d'air (100) étant disposé entre le premier et le deuxième compresseur (104, 102), et le deuxième compresseur (102) étant réalisé, en mode de fonctionnement d'une alimentation en air ouverte, de manière à comprimer de l'air nouvellement acheminé, à partir d'un environnement extérieur, à un premier niveau de pression inférieur et à refouler cet air comprimé à travers le sécheur d'air (100) dans le premier compresseur (104) sous forme d'air séché, et le premier compresseur (104) étant réalisé de manière à comprimer l'air séché à un deuxième niveau de pression plus élevé et à le refouler aux sous-systèmes du dispositif de régulation pneumatique raccordés au premier compresseur (104).

2. Dispositif selon la revendication 1, dans lequel un premier clapet antiretour (122) disposé au niveau d'un côté de sortie du premier compresseur (104) est réalisé de manière à empêcher un reflux dans le premier compresseur (104) de l'air comprimé au deuxième niveau de pression.

3. Dispositif selon la revendication 2, dans lequel un premier sous-système des sous-systèmes comprend une soupape de sécheur (114), la soupape de sécheur (114) étant disposée entre le premier clapet antiretour (122) et le sécheur d'air (100).

4. Dispositif selon les revendications 1 à 3, dans lequel le montage de sécheur comprend en outre une soupape d'environnement (112), la soupape d'environnement (112) étant disposée entre le deuxième compresseur (102) et le sécheur d'air (100) et étant réalisée de manière à permettre un trajet d'air commutable entre le sécheur d'air (100), le deuxième compresseur (102) et l'environnement.

5. Dispositif selon la revendication 4, dans lequel la soupape d'environnement (112) peut être commutée électriquement ou pneumatiquement.

6. Dispositif selon l'une quelconque des revendications 1 à 5, dans lequel un deuxième sous-système des sous-systèmes est prévu pour un fonctionnement en mode de fonctionnement de l'alimentation en air fermée et comprend un système d'actionneur pneumatique (108) avec une soupape d'ouverture montée en amont (116), un accumulateur d'air sous pression (106) et la soupape de commutation (110), la soupape de commutation (110) étant réalisée de manière à adopter un premier (130) et un deuxième (132) état de commutation, un flux d'air, dans le premier état de commutation (130), étant permis exclusivement dans la direction du système d'actionneur pneumatique (108) vers l'accumulateur d'air sous pression (106) en contournant le sécheur d'air (100) et un flux d'air, dans le deuxième état de commutation (132), étant permis exclusivement dans la direction de l'accumulateur d'air sous pression (106) vers le système d'actionneur pneumatique (108) également en contournant le sécheur d'air (100).

7. Dispositif selon la revendication 6, comprenant en outre un deuxième (120) et un troisième (124) clapet antiretour, le deuxième clapet antiretour (120) étant disposé entre la soupape de commutation (110) et le premier compresseur (104) et le troisième clapet antiretour (124) étant disposé entre le premier compresseur (104) et le sécheur d'air (100), le troisième clapet antiretour (124) étant disposé de telle sorte qu'un flux d'air entre la soupape de commutation (110) et le premier compresseur (104) soit permis en contournant le troisième clapet antiretour (124).

8. Dispositif selon la revendication 7, dans lequel le deuxième (120) et le troisième (124) clapet antiretour sont réalisés de manière à permettre un flux d'air exclusivement dans la direction du premier compresseur (104).
